(19) Europäisches Patentamt
European Patent Office
Office européen des brevets

(11) Veröffentlichungsnummer: **0 036 924**
**B1**

(12) **EUROPÄISCHE PATENTSCHRIFT**

(45) Veröffentlichungstag der Patentschrift: **04.12.85**

(51) Int. Cl.⁴: **C 01 B 25/14,** G 01 F 23/16

(21) Anmeldenummer: **81100543.8**

(22) Anmeldetag: **26.01.81**

(54) **Verfahren und Vorrichtung zur Gewinnung von Phosphorpentasulfid mit gleichbleibend niedriger Reaktivität.**

(30) Priorität: **22.02.80 DE 3006625**

(43) Veröffentlichungstag der Anmeldung: **07.10.81 Patentblatt 81/40**

(45) Bekanntmachung des Hinweises auf die Patenterteilung: **04.12.85 Patentblatt 85/49**

(84) Benannte Vertragsstaaten: **CH DE FR GB IT LI**

(56) Entgegenhaltungen:
**FR - A - 1 407 850**
**US - A - 3 200 971**
**US - A - 3 282 653**
**US - A - 3 638 490**
**US - A - 3 969 941**

**CHEMIE, INGENIEUR-TECHNIK, Heft 7, Juli 1965, Seiten 705-709, Weinheim, Bergstr., DE., Dr.J. CREMER: "Zur grosstechnischen Herstellung und Anwendung von Phosphorpentasulfid"**

(73) Patentinhaber: **HOECHST AKTIENGESELLSCHAFT, Postfach 80 03 20, D-6230 Frankfurt am Main 80 (DE)**

(72) Erfinder: **Reichert, Günter, Dipl.-Ing., Weierstrasse 26, D-5303 Bornheim-Merten (DE)**
Erfinder: **Mainzer, Franz, Bergstrasse 81, D-5030 Hürth (DE)**
Erfinder: **Lehmann, Kurt, Dipl.-Phys, Berthold-Brecht-Strasse 92, D-5042 Erftstadt (DE)**
Erfinder: **Niermann, Hermann, Dr., Am Wachberg 34, D-5042 Erftstadt (DE)**

**EP 0 036 924 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft ein Verfahren zur Gewinnung von Phosphorpentasulfid mit gleichbleibend niedriger Reaktivität sowie eine Vorrichtung zur Durchführung dieses Verfahrens.

Phosphorpentasulfid wird großtechnisch z. B. als Grundstoff zur Herstellung von Insektiziden auf Phosphor-Schwefelbasis oder von Schmieröladditiven benutzt. Dabei wird es in der ersten Reaktionsstufe mit Alkoholen oder Phenolen umgesetzt nach der Gleichung

$$P_2S_5 + 4\ ROH \rightarrow 2\ (RO)_2P(S)SH + H_2S$$

Von großer Bedeutung für diese Reaktion ist die sogenannte Reaktivität des $P_2S_5$, d. h. die Geschwindigkeit, mit der es sich mit den eingesetzten Alkoholen umsetzt. Je nach angewandtem Verfahren oder technischer Einrichtung wird eine höhere oder niedrigere Reaktivität verlangt.

Als Maß für die Reaktivität wird die Temperaturerhöhung bei der Reaktion eines Alkohols mit dem betreffenden $P_2S_5$ genommen.

Eine gebräuchliche Methode mißt die maximale Temperaturerhöhung bei der Umsetzung von 36 g $P_2S_5$ mit 100 ml Isopropanol in einem Dewargefäß unter Rühren. Die Temperaturerhöhung durch die benötigte Zeit ergibt dann die Reaktivität in °C/min.

Hochreaktives $P_2S_5$ stellt man allgemein durch rasches Abschrecken dünner $P_2S_5$-Schichten auf Kühlwalzen oder ähnlichen Einrichtungen her, während man niedrigreaktives $P_2S_5$ z. B. durch langsames Abkühlen der Schmelze auf Kühlwalzen erhalten kann. (Chemie, Ingenieur, Technik Bd. 37 (1965) Nr. 7, Seiten 705—709.)

Interne Versuche, das flüssige $P_2S_5$ dabei in den tiefer gelegenen Teil des Schneckentroges einzubringen und unter gleichzeitigem Verfestigen und Zerkleinern in Form kleiner Stücke am oberen Schneckenende auszutragen, mißlangen.

Von wesentlicher Bedeutung für ein einwandfreies Arbeiten der Schnecke und zur Erzielung gleichbleibender Reaktivitäten ist eine möglichst gleichbleibende Füllung des Schneckentroges. Bei Überfüllung des Troges läuft nämlich z. T. noch nicht genügend verfestigtes Material am oberen Schnekkenende aus und führt zu Verstopfungen vor den Mahlorganen, während bei zu geringer Füllung durch zu schnelles Abkühlen die Reaktivität ansteigen kann.

Es wurde daher intern versucht, den Materialstand in der Schnecke zu kontrollieren, z. B. über die Stromaufnahme des Schneckenantriebes. Doch ist dieses Verfahren zu ungenau und liefert außerdem für jede Schneckengeschwindigkeit andere Werte der Stromaufnahme bei einem bestimmten Materialstand.

Allgemein ist bekannt, die Standhöhe von Flüssigkeiten in Behältern dadurch zu messen, daß man durch die Flüssigkeit ein inertes Gas perlen läßt und den sich dabei einstellenden Gasdruck mißt. Da sich bei Änderung der Füllstandshöhe entsprechend der Gasdruck ändert, kann man aus der sich ergebenden Druckdifferenz auf die Änderung der Standhöhe der Flüssigkeit im Behälter schließen (sog. Perlstandsmessung).

Es war die Aufgabe gestellt, ein festes Phosphorpentasulfid mit gleichbleibend niedriger Reaktivität herzustellen und eine Vorrichtung zur Durchführung dieses.

Die Erfindung basiert auf der überraschenden Erkenntnis, daß man dieses an sich bekannte Meßverfahren auch zur Messung der Standhöhe von flüssigem $P_2S_5$ in Kühlschnecken einsetzen kann.

Dies war insofern nicht vorhersehbar, als die ca. 300—400°C heiße Schmelze in ständigem Kontakt mit den Kühlflächen von Schnecken und Kühltrog steht und damit ein Verbacken des Perlrohres mit sich verfestigendem $P_2S_5$ zu erwarten wäre. Selbst bei Verwendung von kaltem Inertgas bleibt die Meßleitung frei.

Die Erfindung betrifft ein Verfahren zur Gewinnung von Phosphorpentasulfid ($P_2S_5$) mit gleichbleibend niedriger Reaktivität aus einer 300 bis 400°C heißen Phosphorpentasulfidschmelze in einem Kühlaggregat, das dadurch gekennzeichnet ist, daß als Kühlaggregat ein geneigter Schneckenkühler benutzt wird, wobei die Phosphorpentasulfidschmelze an dessen unterem Ende zugeführt und an dessen oberen Ende das feste Phosphorpentasulfid ausgetragen wird und daß man am unteren Kühlerende in unmittelbarer Nähe des dort zufließenden $P_2S_5$ in einem Bereich zwischen der Achse und der Unterkante der Schnecke ein inertes Gas einleitet, dieses durch das flüssige $P_2S_5$ perlen läßt, die sich dabei in Abhängigkeit von der jeweiligen Höhe des $P_2S_5$-Flüssigkeitsspiegels ergebende Druckdifferenz mißt und die Änderungen dieser Druckdifferenz zur Regelung des Zuflusses an flüssigem $P_2S_5$ in den Schneckenkühler auf einen vorher bestimmten Bereich der Höhe des Flüssigkeitsspiegels in dem Schneckenkühler benutzt.

Zweckmäßig wird das Verfahren in einer Vorrichtung durchgeführt, die aus einem geneigten Schneckenkühler (1) besteht, der mit einem Kühlmantel (2), einer Zuführung (3) für flüssiges $P_2S_5$ am unteren Kühlerende sowie einem Austragsstutzen (4) für festes $P_2S_5$ am oberen Kühlerende versehen und mit mindestens einer gekühlten Schnecke (5) bestückt ist, die durch ein Antriebsaggregat (6) bewegt wird, wobei in den Schneckenkühler (1) eine Inertgasleitung (7) führt, welche mit einem Gerät (8) zur Druckmessung und Füllstandsanzeige verbunden ist, wobei die Inertgasleitung (7) in unmittelbarer Nähe der Zuführungsleitung (3) für das flüssige $P_2S_5$ am unteren Kühlerende angeordnet und so

angebracht ist, daß sie im Bereich zwischen der Achse und der Unterkante der Schnecke endet und das Gerät (8) zur Druckmessung und Füllstandsanzeige über eine Verbindung (9) mit einem in die Zuleitung (3) für das flüssige $P_2S_5$ eingebauten Regelventil (10) in Kontakt steht.

Mit der so beschriebenen Meßeinrichtung läßt sich der Stand des flüssigen $P_2S_5$ im Kühltrog sehr genau und reproduzierbar messen. Ferner läßt sich in Kombination mit einem Regelventil im Materialzufluß der Stand des flüssigen $P_2S_5$ im Kühltrog sehr genau konstant halten, auch wenn der Materialzufluß prozeßbedingt starken Schwankungen unterliegt.

## Beispiel

In einen Kühltrog mit 2 Schnecken von ca. 180 mm Durchmesser und einer Troglänge von ca. 3050 mm und einer Trogbreite von ca. 350 mm, die mit einer Neigung von ca. 6° montiert war, wurden am unteren Ende ca. 400 kg flüssiges $P_2S_5$ pro Stunde dosiert. Dabei wurden der Kühltrog mit 8000 l/h und die Schnecken mit je 4000 l/h Kühlwasser beaufschlagt.

Am unteren Ende des Kühltroges war erfindungsgemäß eine Perlstandsmessung angeordnet, die mit Stickstoff betrieben wurde. Der Stand des flüssigen $P_2S_5$ wurde mit Hilfe einer Differenz-Druckmethode angezeigt. Er konnte mit Hilfe eines Feinregelventils innerhalb enger Grenzen, nämlich zwischen 65 und 75% des zulässigen Maximalstandes gehalten werden.

Die Temperatur des die Kühlschnecke verlassenden, verfestigten Materials lag in engen Grenzen zwischen 130 und 140° C. Die Reaktivität betrug 0,8—0,9° C/min.

Ohne Standmessung schwankte der Stand in der Kühlschnecke zwischen 40 und 100%, das die Schnecke verlassende Material war zum Teil nicht vollständig verfestigt. Es kam zu Temperaturspitzen bis 250° C. Die Reaktivität schwankte zwischen 0,8 und 1,5° C/min.

## Patentansprüche

1. Verfahren zur Gewinnung von Phosphorpentasulfid ($P_2S_5$) mit gleichbleibend niedriger Reaktivität aus einer 300 bis 400° C heißen Phosphorpentasulfidschmelze in einem Kühlaggregat, dadurch gekennzeichnet, daß als Kühlaggregat ein geneigter Schneckenkühler benutzt wird, wobei die Phosphorpentasulfidschmelze an dessen unterem Ende zugeführt und an dessen oberen Ende das feste Phosphorpentasulfid ausgetragen wird und daß man am unteren Kühlerende in unmittelbarer Nähe des dort zufließenden $P_2S_5$ in einem Bereich zwischen der Achse und der Unterkante der Schnecke ein inertes Gas einleitet, dieses durch das flüssige $P_2S_5$ perlen läßt, die sich dabei in Abhängigkeit von der jeweiligen Höhe des $P_2S_5$-Flüssigkeitsspiegels ergebende Druckdifferenz mißt und die Änderungen dieser Druckdifferenz zur Regelung des Zuflusses an flüssigem $P_2S_5$ in den Schneckenkühler auf einen vorher bestimmten Bereich der Höhe des Flüssigkeitsspiegels in dem Schneckenkühler benutzt.

2. Vorrichtung zur Durchführung des Verfahrens nach Anspruch 1 in einem geneigten Schneckenkühler (1), der mit einem Kühlmantel (2), einer Zuführung (3) für flüssiges $P_2S_5$ am unteren Kühlerende sowie einem Austragsstutzen (4) für festes $P_2S_5$ am oberen Kühlerende versehen und mit mindestens einer gekühlten Schnecke (5) bestückt ist, die durch ein Antriebsaggregat (6) bewegt wird, wobei in den Schneckenkühler (1) eine Inertgasleitung (7) führt, welche mit einem Gerät (8) zur Druckmessung und Füllstandsanzeige verbunden ist, wobei die Inertgasleitung (7) in unmittelbarer Nähe der Zuführungsleitung (3) für das flüssige $P_2S_5$ am unteren Kühlerende angeordnet und so angebracht ist, daß sie im Bereich zwischen der Achse und der Unterkante der Schnecke endet und das Gerät (8) zur Druckmessung und Füllstandsanzeige über eine Verbindung (9) mit einem in die Zuleitung (3) für das flüssige $P_2S_5$ eingebauten Regelventil (10) in Kontakt steht.

## Claims

1. Process for making phosphorus pentasulfide ($P_2S_5$) of constant low reactivity from a phosphorus pentasulfide melt of 300 to 400° C in a cooling device, which comprises: using as the cooling device a screw cooler arranged in inclined position, at the lower end of which the phosphorus pentasulfide melt is supplied and at the upper end of which solid phosphorus pentasulfide is removed; introducing an inert gas within a region lying between the axis and lower edge of the screw, at the lower end of the cooler in the immediate neighborhood of the incoming $P_2S_5$; bubbling the inert gas through the liquid $P_2S_5$; measuring the pressure difference which establishes in accordance with the respective $P_2S_5$-level; and utilizing variations in the pressure differences for regulating the supply of liquid $P_2S_5$ to the screw cooler so as to maintain the level of liquid in the screw cooler within a predetermined range.

2. Apparatus for carrying out the process as claimed in claim 1 in a screw cooler arranged in inclined position, provided, at its lower end, with a cooling jacket (2), a liquid $P_2S_5$ inlet (3) and, at its upper end, with a solid $P_2S_5$ outlet (4) and at least one cooled screw conveyor (5) driven by means of a drive (6),

wherein an inert gas inlet (7) which is connected to a pressure-measuring and level-indicating device (8) is disposed so as to open into the screw cooler (1), the inert gas inlet (7) being positioned in the immediate neighborhood of the liquid $P_2S_5$ inlet (3) at the lower end of the cooler so as to terminate at a level which lies between the axis and lower edge of the screw, and wherein the pressure-measuring and level-indicating device (8) is arranged so as to communicate, through a connection (9), with a regulating valve (10), the latter being installed in the liquid $P_2S_5$ inlet (3).

**Revendications**

1. Procédé de production de pentasulfure de phosphore ($P_2S_5$) de faible réactivité constante à partir d'une masse fondue de $P_2S_5$ à 300—400°C dans un dispositif de refroidissement, caractérisé en ce qu'on utilise comme dispositif de refroidissement une vis réfrigérante inclinée, à l'extrémité inférieure de laquelle on envoie la masse fondue de $P_2S_5$ et à l'extremité supérieure de laquelle on décharge le $P_2S_5$ solide, et en ce qu'on introduit un gaz inerte dans une région entre l'axe et le bord inférieur de la vis, à l'extrémité inférieure du réfrigérant au voisinage immédiat de l'arrivée de $P_2S_5$, on laisse le gaz inerte barboter dans le $P_2S_5$ liquide, on mesure la différence de pression s'établissant en fonction du niveau de remplissage de $P_2S_5$ liquide et on utilise les variations de cette différence de pression pour régler l'arrivée de $P_2S_5$ liquide dans la vis réfrigérante dans une plage déterminée au préalable du niveau de remplissage de liquide dans la vis réfrigérante.

2. Appareil pour la mise en œuvre du procédé selon la revendication 1, dans une vis réfrigérante inclinée (1) munie d'une enveloppe réfrigérante (2), d'un tube d'admission (3) de $P_2S_5$ liquide à l'extrémité inférieure du réfrigérant et d'un tube de sortie (4) de $P_2S_5$ solide à l'extrémité supérieure du réfrigérant et, en outre, d'au moins une vis (5) refroidie qui est entraînée à l'aide d'un dispositif d'entraînement (6), une conduite d'admission de gaz inerte (7) reliée à un dispositif (8) de mesure de la pression et d'indication du niveau de remplissage conduisant dans la vis réfrigérante (1), la conduite d'admission de gaz inerte (7) étant disposée an voisinage immédiat du tube d'admission (3) de $P_2S_5$ liquide à l'extrémité inférieure du réfrigérant et agencée de manière à déboucher dans la région entre l'axe et le bord inférieur de la vis, et le dispositif (8) de mesure de la pression et d'indication du niveau de remplissage étant en contact par un raccord (9) avec une vanne de réglage (10) installée dans le tube d'admission (3) de $P_2S_5$ liquide.

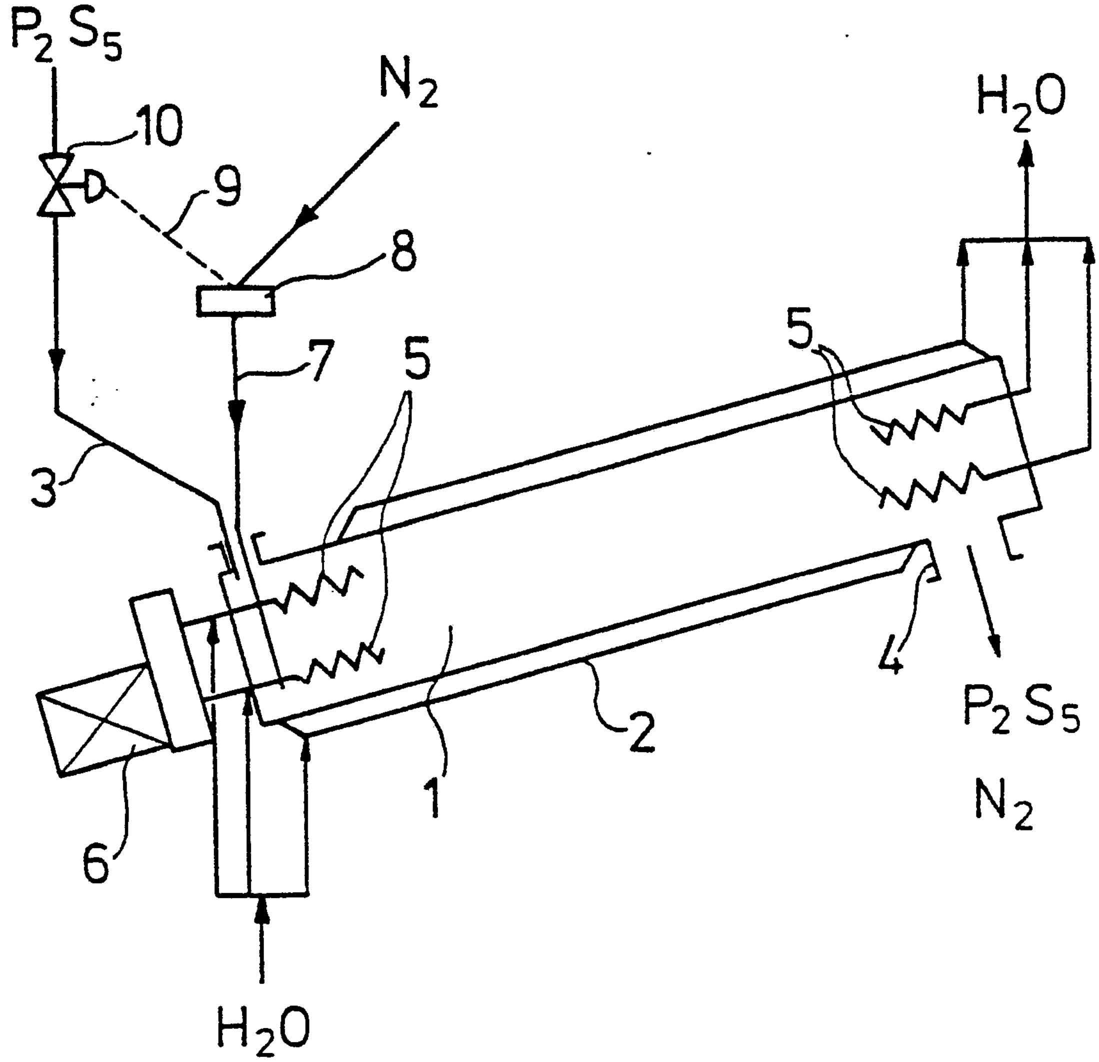

$P_2S_5$
10
9
$N_2$
8
7
5
3
$H_2O$
5
4
2
1
6
$P_2S_5$
$N_2$
$H_2O$